**Europäisches Patentamt**

**European Patent Office**

**Office européen des brevets**

(11) Veröffentlichungsnummer: **0 213 541 B1**

# EUROPÄISCHE PATENTSCHRIFT

(45) Veröffentlichungstag der Patentschrift:
16.01.91 Patentblatt 91/03

(51) Int. Cl.$^5$: **G01V 1/00**

(21) Anmeldenummer: **86111468.4**

(22) Anmeldetag: **19.08.86**

(54) **Verfahren zur Detektion von Fahrzeugen.**

(30) Priorität: **31.08.85 DE 3531230**

(43) Veröffentlichungstag der Anmeldung:
**11.03.87 Patentblatt 87/11**

(45) Bekanntmachung des Hinweises auf die
Patenterteilung:
**16.01.91 Patentblatt 91/03**

(84) Benannte Vertragsstaaten:
**DE FR GB IT NL SE**

(56) Entgegenhaltungen:
**DE-A- 3 222 255**
**FR-A- 2 599 860**
**GB-A- 2 104 218**
**US-A- 4 189 701**

(56) Entgegenhaltungen:
**PATENT ABSTRACTS OF JAPAN, Band 3, Nr.**
**31 (E-98), 16. März 1979, Seite 56 E 98; &**
**JP-A-54 9967 (HITACHI SEISAKUSHO)**
**25-01-1979**
**PROCEEDINGS OF THE SEMINAR ON**
**PATTERN RECOGNITION, Sart-Tilman, 19.-20.**
**November 1977, Band I+II, Seiten 9.2.1-9.2.4,**
**Sitel, Ophain, BE; C.G. WINCKLESS:**
**"Acoustic detection of motor vehicles"**

(73) Patentinhaber: **Fried. Krupp Gesellschaft mit**
**beschränkter Haftung**
**Altendorfer Strasse 103**
**D-4300 Essen 1 (DE)**

(72) Erfinder: **Arens, Egidius**
**Cordstrasse 13**
**D-2807 Achim (DE)**
Erfinder: **Meyersieck, Manfred**
**Häsefeld 3**
**D-2815 Langwedel (DE)**
Erfinder: **Schulte, Alfred**
**Suhrfeldstrasse 63**
**D-2800 Bremen 1 (DE)**

## Beschreibung

Die Erfindung betrifft eine Einrichtung zur Detektion von Fahrzeugen der im Oberbegriff des Anspruchs 1 genannten Art.

Das Betriebsgeräusch eines Fahrzeugs wird hauptsächlich durch seine Antriebsmaschinen verursacht und als Fahrgeräusch detektiert und für eine Peilung ausgewertet. Aber auch andere auf dem Fahrzeug befindliche Betriebsaggregate, wie Pumpen, Winden oder Kühlaggregate strahlen Schallenergie ab und tragen ebenso zum Betriebsgeräusch des Fahrzeugs bei, so daß auch bei ruhendem Fahrzeug Detektion und Peilung möglich sein kann. In der Wasserschalltechnik werden bislang zur Detektion Sonaranlagen eingesetzt, mit denen im Falle des Küstenschutzes eine Invasion oder im Seekrieg ein Angriff durch gegnerische U-Boote oder Torpedos frühzeitig erkannt werden kann. In der Luftschalltechnik ist mit entsprechenden Mikrophonanlagen eine Detektion von Luftfahrzeugen, z.B. Hubschraubern, oder Landfahrzeugen, z.B. Panzern, möglich.

Die Detektion gegnerischer Fahrzeuge erfolgt üblicherweise, wenn sich das Betriebsgeräusch des Fahrzeugs aus einem allgemeinen Hintergrundgeräusch deutlich abhebt, nämlich sich in seiner Lautstärke davon unterscheidet. Dies ist der Fall, wenn das Fahrzeug durch eine hohe Geschwindigkeitsstufe ein lautes Fahrgeräusch abstrahlt oder so nahe ist, daß sich sein Betriebsgeräusch als Nutzgeräusch deutlich von einem Störgeräusch unterscheidet. Zur automatischen Detektion des Fahrzeugs wird deshalb in einer Empfangsanlage eine Detektionsschwelle für das empfangene Geräusch eingestellt, die um so höher liegt, je niedriger die Falschalarmrate gewählt ist. Eine solche Anordnung ist beispielsweise in der DE-OS 20 52 283 beschrieben.

Problematisch wird die Detektion, wenn das Hintergrundgeräusch das Betriebsgeräusch überdeckt, weil es naturgemäß lauter ist oder weil das Fahrzeug noch weit entfernt ist und somit das Nutz/Störverhältnis relativ klein ist.

Aus der US-PS 4 189 701 ist ein Detektionsverfahren bekannt, bei dem ein Warnsignal erzeugt wird, wenn von einem Hydrophon ein mit niedriger Frequenz amplitudenmoduliertes, breitbandiges Geräusch empfangen wird. Das Empfangssignal wird über einen Bandpaß einem Demodulator mit nachgeschaltetem Tiefpaß zugeführt. Der Demodulator bildet die Einhüllende, mit dem Tiefpaßfilter wird die Frequenz der Einhüllenden bestimmt.

Der Vorteil besteht insbesondere darin, daß die Detektion mit größter Sicherheit erfolgt, da sie auf dem Erkennen von Schwankungen in der Einhüllenden des empfangenen Geräusches beruht. Diese Schwankungen treten bei propellerbetriebenen Fahrzeugen auf, wie beispielsweise Oberflächenschiffen, U-Booten, Torpedos oder bei Propellerflugzeugen oder Hubschraubern und sind auch bei schlechtem Nutz/Störverhältnis detektierbar. Auch laute Störgeräusche rufen keinen Fehlalarm aus, da ihnen die charakteristischen Schwankungen der Einhüllenden fehlen. Die Falschalarmrate liegt deshalb wesentlich niedriger als bei herkömmlichen Verfahren, die die Detektion abhängig von einer eingestellten Lautstärkeschwelle durchführen. Auch wenn das Fahrzeug weit entfernt ist und sich sein Betriebsgeräusch lautstärkemäßig nicht vom Störhintergrund signifikant abhebt, ist eine Detektion möglich, da auch dann eine Modulation der Einhüllenden mit periodischem Charakter auftritt, die durch sich drehende Propeller verursacht wird.

Wird das Betriebsgeräusch von einer Peilanlage empfangen, mit der über Richtcharakteristiken gepeilt wird, so liegen Detektion und Peilung eines Fahrzeugs gleichzeitig vor. Bei Verwendung eines Kleinbasispeilers, der vier elektroakustische Wandler mit Rundumcharakteristik aufweist, wird die Detektion mit Hilfe der von den Wandlern empfangenen Geräusche durchgeführt, eine gleichzeitige Peilung zum Fahrzeug ist über Laufzeitauswertung genauso vorteilhaft möglich, wie sie beispielsweise in der DE-OS 30 17 797 angegeben ist.

Auch bei geringer Empfangs-Bandbreite der Empfangsanlage ist ein Ziel detektierbar, das breitbandig Betriebsgeräusche abstrahlt, selbst dann, wenn die Energie in einen Frequenzbereich abgestrahlt wird, der tiefer als die Empfangs-Bandbreite liegt, da die Detektion auf dem Erkennen einer Amplitudenmodulation beruht und die dadurch verursachten Seitenbänder bei jeder Frequenz des Rauschträgers auftreten. Eine solche Peilanlage wäre vorteilhaft als Torpedosonar einsetzbar.

Diese Peilanlage kann in einem Frequenzbereich betrieben werden, in dem Richtcharakteristiken naturgemäß einen geringen Öffnungswinkel bzw. eine gute Bündelung aufweisen, so daß eine winkelmäßige Trennung von Zielen besonders elegant durchgeführt werden kann, da die niederfrequenten Anteile des Geräusches nicht unmittelbar empfangen zu werden brauchen, sondern durch Demodulation eines schmalen Rauschbandes im Frequenzbereich der Peilanlage.

Ebenfalls ist es möglich, ein breitbandig empfangenes Geräusch durch Filterung oder Fast-Fourier-Transformation schmalbandig zu machen und dieses schmalbandige Geräusch bezüglich seiner Hüllkurve zu untersuchen, da auch jedes schmale Teilband des gesamten Geräuschbandes die niederfrequente Information der Antriebsmaschinen oder sonstigen in Betrieb befindlicher Aggregate des Fahrzeugs enthält. Durch die Verkleinerung des Frequenzumfangs auf ein Teilband ist eine Störbefreiung möglich.

Es ist Aufgabe der vorliegenden Erfindung eine Einrichtung der im Oberbegriff des Anspruchs 1 genannten Art zu schaffen, die eine Trennung mehrerer unter einer Peilung detektierter Fahrzeuge gestattet.

Diese Aufgabe ist erfindungsgemäß durch Vorrichtung gemäß Anspruch 1 gelöst. Mit einer Logikschaltung ist die Angabe möglich, ob das zuerst detektierte Betriebsgeräusch von einem oder von mehreren Fahrzeugen abgestrahlt wurde. Bei einer Änderung der Anzahl oder der Frequenz der unter einer Peilung auftretenden Spektrallinien ist davon auszugehen, daß das detektierte Fahrzeug seine Geschwindigkeit geändert hat und/oder einige seiner Betriebsaggregate abgeschaltet hat. Wenn unter benachbarten Peilungen gleiche Spektrallinien wiedererkannt werden, sind vorher mehrere Fahrzeuge unter gleichem Winkel gepeilt worden und es ist nunmehr eine Mehrzieltrennung gelungen. Verschwinden hingegen plötzlich sämtliche Spektrallinien unter einer Peilung, könnte das ein Zeichen dafür sein, daß das detektierte Ziel seine Antriebsaggregate abgestellt oder auf Lauschfahrt umgeschaltet hat. Dadurch ist sein Betriebsgeräusch schlagartig so leise geworden, daß es nicht mehr von der Peilanlage detektierbar ist. Findet man stets unter gleicher Peilung gleiche Frequenzspektren, so läßt sich auf stehende Peilung schließen. Das detektierte Fahrzeug bewegt sich beispielsweise mit konstanter, radialer Geschwindigkeit bezüglich der Peilanlage. Steigt gleichzeitig der Pegel der Spektrallinien, so befindet sich das detektierte Fahrzeug auf Kollisionskurs.

Mit der Weiterbildung der Einrichtung nach Anspruch 2 wird eine Störbefreiung durch Integration oder Mittelwertbildung erzielt. Wenn Spektrallinien im Frequenzspektrum des zeitlichen Verlaufs der Einhüllenden nur kurzzeitig auftreten, ist davon auszugehen, daß diese Spektrallinien nicht zum Betriebsgeräusch eines Fahrzeugs gehören, sondern durch stochastische Störgeräusche verursacht wurden. Erst wenn die Spektrallinien der über ein vorgebbares Zeitintervall ermittelten Frequenzspektren wiederholt bei der gleichen Frequenz auftreten und dadurch bestätigt werden, ist ein Fahrzeug detektiert worden.

Mit der Ausführungsform der Einrichtung nach Anspruch 3 ist eine einfache Möglichkeit angegeben, die Schwankungen im zeitlichen Verlauf der Einhüllenden zu erkennen. Mit der Frequenzanalyseschaltung wird die Frequenz des zeitlichen Verlaufs bestimmt und wenn sie einen Abstand zur Frequenz Null aufweist, also eine Wechselspannung ist, eine Anzeige auf der Detektionsanzeigeeinheit bewirkt. Die Frequenzanalyseschaltung ist eine Schaltanordnung zum Berechnen des gesamten Frequenzspektrums des zeitlichen Verlaufs der Schwankungen. Die Detektionssicherheit wird erhöht, wenn gemäß der Ausführungsform der Einrichtung nach Anspruch 4 durch anschließende zeitliche Mittelwertbildung der Frequenzspektren eine zusätzliche Störbefreiung erzielt wird.

Bei der Ausführungsform der Einrichtung nach Anspruch 5 wird ein Vergleich der Spektrallinien durchgeführt und nur bei ihrer Bestätigung innerhalb eines vorgebbaren Zeitintervalls eine Fahrzeugdetektion bewirkt. Diese Art der Integration nennt man Stapelung. Sie ist dann besonders elegant wenn die Signalverarbeitung digital durchgeführt wird.

Der Vorteil der Ausführungsform der Einrichtung nach Anspruch 6 besteht darin, daß durch die Schwellenschaltung jede Detektion mit einer vorgegebenen und dadurch bekannten Falschalarmrate bewertet wird. Durch die in der vorteilhaften Weiterbildung nach Anspruch 7 angegebene Normalisierung der Frequenzspektren wird das Einstellen einer Schwelle für die Spektrallinien im Frequenzspektrum, bei dessen Überschreiten ein Fahrzeug detektiert ist, erleichtert.

Besonders wirkungsvoll ist die Verknüpfung der erfindungsgemäßen Einrichtung mit einer Panorama-Empfangsanlage, in der über dem Azimut rundum benachbarte Richtcharakteristiken gebildet werden und jedem Richtungskanal ein Winkel zugeordnet ist. Eine solche Ausführungsform gibt Anspruch 8 an. Je Richtcharakteristik wird eine Detektion und die Peilung zum Fahrzeug angegeben.

Mit der vorteilhaften Ausführungsform nach Anspruch 9 wird ein Time-Bearing-Plot angefertigt, auf dem die Detektion von Fahrzeugen und ihre weiterfolgenden Peilungen angezeigt werden.

Die vorteilhafte Ausführungsform nach Anspruch 10 ermöglicht eine Zieltrennung bei sich kreuzenden Peilungen und damit eine Zielverfolgung.

Die erfindungsgemäßen Einrichtungen sind in der Wasserschall- und Luftschalltechnik einsetzbar, um Schiffe, U-Boote, Torpedos im Wasser oder Hubschrauber in der Luft zu orten, da die sie antreibenden Propeller diese charakteristische Modulation des abgestrahlten Geräusches bewirken, auf der das erfindungsgemäße Detektionsverfahren beruht.

Die Erfindung ist anhand von in der Zeichnung dargestellten Ausführungsbeispielen für eine Einrichtung zur Detektion von Fahrzeugen dargestellt.

Es zeigen :

Fig. 1 beispielhaft ein Diagramm des zeitlichen Verlaufs eines empfangenen Geräusches,

EP 0 213 541 B1

Fig. 2 ein Blockschaltbild der Detektionsvorrichtung zur Auswertung des in Fig. 1 beispielhaft dargestellten, empfangenen Geräusches,

Fig. 3 ein Schaltbild einer Integratoranordnung in der Vorrichtung gemäß Fig. 2,

Fig. 4 ein Blockschaltbild einer Sonar-Empfangsanlage zum richtungsselektiven Empfang von Geräuschen in Verbindung mit einer Detektionsvorrichtung gemäß Fig. 2,

Fig. 5 ein Blockschaltbild einer Logikschaltung für eine Detektionsanzeigeanordnung in der Detektionsvorrichtung gemäß Fig. 4,

Fig. 6 und 7 jeweils eine schematische Darstellung einer Anzeige für die Detektionsanzeigeanordnung in der Detektionsvorrichtung gemäß Fig. 4.

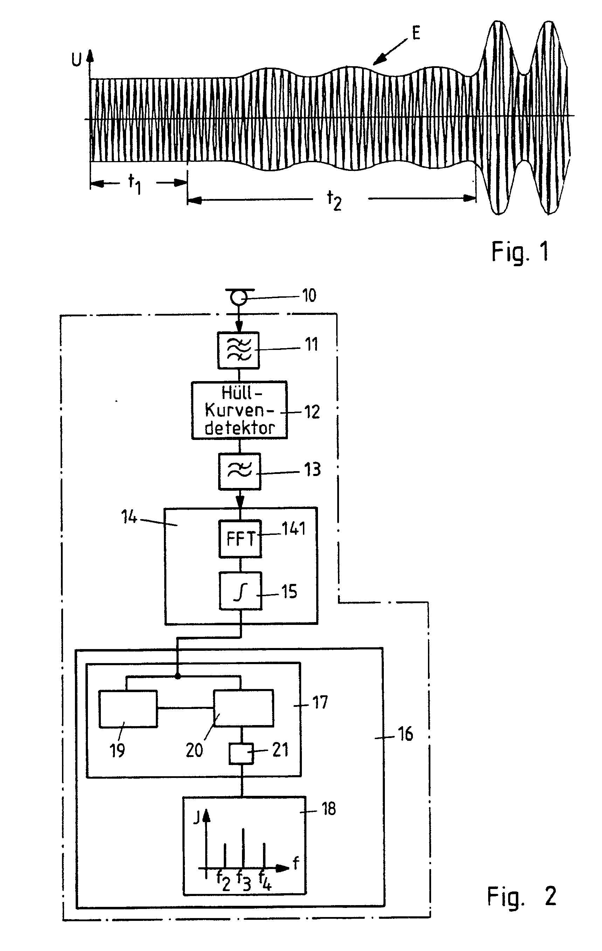

Fig. 1 zeigt einen möglichen zeitlichen Verlauf eines empfangenen Geräusches, der Umgebungsgeräusche und von einem Fahrzeug abgestrahlte Betriebsgeräusche enthält. Signifikant hebt sich der zeitliche Verlauf der Einhüllenden E ab, der innerhalb einer Zeitspanne $t_1$ nahezu konstant ist und während einer Zeitspanne $t_2$ Schwankungen annimmt, deren Frequenz und Amplitude sich nach der Zeitspanne $t_2$ erhöhen. Dieses empfangene Geräusch enthält beispielsweise das Betriebsgeräusch eines U-Bootes, das sich während der Zeitspanne $t_1$ auf Schleichfahrt befindet, also sich bei geringer Geschwindigkeit leise und unauffällig verhält, danach seine Geschwindigkeit erhöht und nach der Zeitspanne $t_2$ mit einer höheren Fahrstufe fährt. Mit dem nachstehend vorgestellten Verfahren wird dieses Geräusch zur Detektion von Fahrzeugen ausgewertet. Es wird der zeitliche Verlauf der Einhüllenden E des empfangenen Geräusches bestimmt und auf Schwankungen untersucht. Lautstärkeschwankungen in Form einer Amplitudenmodulation eines rauschförmigen Trägers treten nur auf, wenn die Geräuschquelle nicht nur stochastische Anteile abstrahlt, sondern diese Anteile durch Antriebsaggregate und sich drehende Teile, beispielsweise Propeller, hervorgerufen oder beeinflußt werden. Diese Geräuschanteile im empfangenen Geräusch sind das für Fahrzeuge signifikante Detektionskriterium. Man sieht in Fig. 1, daß auch bei sich kaum änderndem Geräuschpegel der zeitliche Verlauf der Einhüllenden E verändert und nach der Zeitspanne $t_1$ auf Fahrzeug erkannt wird, da nun plötzlich die signifikanten Schwankungen der Einhüllenden auftreten.

Fig. 2 zeigt ein Blockschaltbild einer Vorrichtung zur Detektion von Fahrzeugen, die breitbandig Betriebsgeräusche abstrahlen. Mit einem Hydrophon 10 werden Geräusche gemäß Fig. 1 empfangen. Das Hydrophon 10 weist rundum die gleiche Empfindlichkeit auf. Dem Hydrophon 10 ist über ein Bandpaß 11 ein Hüllkurvendetektor 12 mit Tiefpaß 13 nachgeschaltet, an dessen Ausgang der zeitliche Verlauf der Einhüllenden E erscheint. Der Bandpaß 11 wird nur vorgesehen, wenn das verwendete Hydrophon 10 nicht konstante Empfindlichkeit über dem gesamten Frequenzbereich, sondern in einem schmaleren Frequenzband eine erhöhte Empfindlichkeit aufweist. Dann wird der Durchlaßbereich des Bandpasses 11 auf dieses Frequenzband abgestimmt. Dem Tiefpaß 13 ist eine Frequenzanalyseschaltung 14 nachgeschaltet, die eine Filtereinrichtung oder eine Rechenschaltung 141 zum Bestimmen der Fast-Fourier-Transformation enthält. In der Frequenzanalyseschaltung 14 wird das Frequenzspektrum der Einhüllenden E ermittelt. Der Rechenschaltung 141 in der Frequenzanalyseschaltung 14 ist eine Integratoranordnung 15 nachgeordnet, deren Intergrationszeit mindestens ein Zeitintervall umfaßt, wobei dieses Zeitintervall abhängig vom Nutz/Störverhältnis oder einer möglichen maximalen Geschwindigkeit des zu detektierenden Fahrzeugs gewählt und eingestellt ist.

In der Frequenzanalyseschaltung 14 wird die Einhüllende E des vom Hydrophon 10 empfangenen Geräusches gemäß Fig. 1 bezüglich ihres Frequenzinhalts untersucht. Das Frequenzspektrum am Ausgang der Frequenzanalyseschaltung 14 weist beispielsweise während der Zeitspanne $t_1$ nur Spektrallinien auf, die bei der Frequenz f=0 liegen, da die Einhüllende hier nahezu konstant ist. Während der Zeitspanne $t_2$ erscheint am Ausgang der Frequenzanalyseschaltung 14 ein Frequenzspektrum, das mindestens bei einer Frequenz $f_1$ eine Spektrallinie aufweist und ggf. bei Vielfachen der Frequenz $f_1$. Wenn mehrere Betriebsaggregate des Fahrzeugs Geräusche abstrahlen, werden weitere Spektrallinien im Frequenzspektrum erscheinen. Nach der Zeitspanne $t_2$ hat sich das Frequenzspektrum am Ausgang der Frequenzanalyseschaltung 14 wieder verändert. Es erscheint eine oder mehrere Spektrallinien bei Frequenzen, die größer sind als $f_1$, beispielsweise bei den Frequenzen $f_2$ und $f_3$ und $f_4$, wie es in Fig. 2 in der Anzeige einer Detektionsanzeigeeinheit 16 dargestellt ist.

Die Detektionsanzeigeeinheit 16, die der Frequenzanalyseschaltung 14 nachgeschaltet ist, enthält eine Schwellenschaltung 17 und eine Anzeigeeinheit 18. In der Schwellenschaltung 17 wird abhängig von der gewünschten Falschalarmrate eine Detektionsschwelle eingestellt. Sämtliche Spektrallinien, die diese Detektionsschwelle überschreiten, werden abhängig von ihrer Frequenz auf der Anzeigeeinheit 18 dargestellt. Zur Vereinfachung der Feststellung, ob die Detektionsschwelle überschritten wurde, wird das Frequenzspektrum am Ausgang der Frequenzanalyseschaltung 14 mit einem Bezugsspektrum, das in einer Rechenschaltung 19 berechnet wird, in einem Quotientenbildner 20 ins Verhältnis gesetzt. In der Rechenschaltung 19 wird aus dem Frequenzspektrum ein Bezugsspektrum dadurch gewonnen, daß das Frequenz-

4

spektrum am Ausgang der Integratorschaltung 15 mit einer Rechteckfunktion gefaltet wird. Andere Verfahren zur Erstellung eines Bezugsspektrums sind ebenfalls möglich. Durch diese Signalverarbeitung wird der "farbige" Rauschhintergrund im Frequenzspektrum "weiß" gemacht, d.h. abgesehen von den herausragenden Spektrallinien, die vom Betriebsgeräusch stammen, weist das übrige Frequenzspektrum gleichen, kleineren Pegel auf. Man nennt diese Signalverarbeitung Normalisierung. Die normalisierten Spektrallinien werden in einer dem Quotientenbildner 20 nachgeschalteten Schwellenstufe 21 mit einer eingestellten Detektionsschwelle verglichen und auf der nachgeordneten Anzeigeeinheit 18 dargestellt, wenn sie die Detektionsschwelle überschreiten.

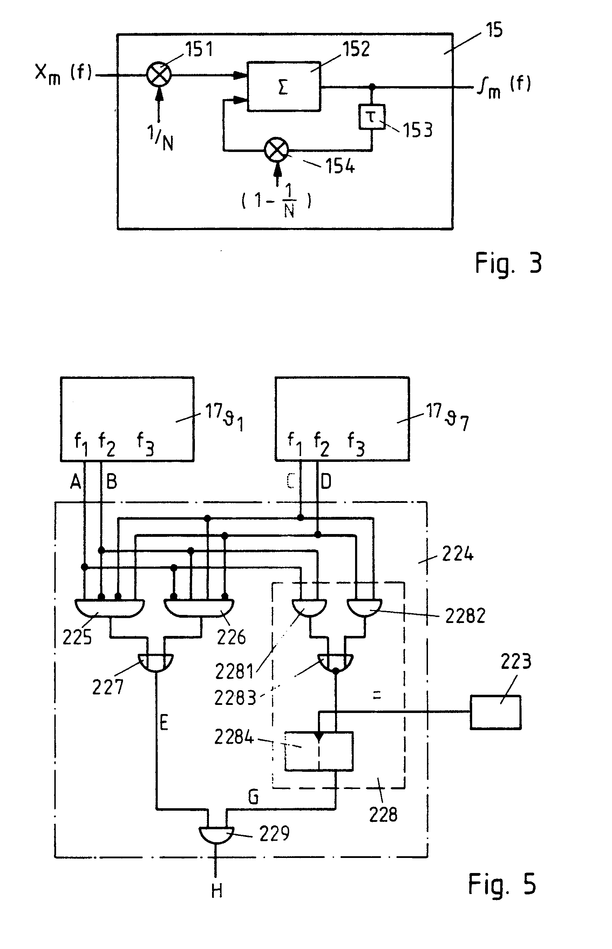

Fig. 3 zeigt ein Blockschaltbild einer in der Frequenzanalyseschaltung 14 enthaltenen Integratoranordnung 15, die als Stapelspeicher aufgebaut ist. $X_m(f)$ sind die Spektrallinien als Funktion der Frequenz am Ausgang der Rechenschaltung 141. In einer Multiplizierstufe 151 werden die einzelnen Spektrallinien durch eine Stapelzahl N geteilt, die abhängig vom Nutz/Störverhältnis des empfangenen Geräusches einstellbar ist. Der Multiplizierstufe 151 ist eine Addierstufe 152 nachgeschaltet, deren zweiter Eingang mit einem Rückführungszweig vom Ausgang der Addierstufe 152 verbunden ist. Der Rückführungszweig besteht aus einer Verzögerungsstufe 153 und einem Multiplizierglied 154. In der Verzögerungsstufe 153 ist eine Speicherzeit eingestellt, die der Zeit entspricht, nach der jeweils ein neues Frequenzspektrum am Ausgang der Rechenschaltung erscheint. Das im vorherigen Rechenzyklus berechnete Frequenzspektrum am Ausgang der Verzögerungsstufe 153 wird in dem Multiplizierglied 154 mit der Differenz $(1 - \frac{1}{N})$ multipliziert und zu den momentan berechneten Spektrallinien, die um den Faktor N geteilt sind, hinzugezählt. Durch diesen Rechenprozeß entsteht eine Integration der Spektrallinien je Frequenz, die Integrationszeit wird durch die Stapelzahl N eingestellt.

Das integrierte oder geglättete Frequenzspektrum am Ausgang der Integratoranordnung 15 ist mit $S_m(f)$ benannt, wobei m der momentane Datensatz und (m-1) der im letzten Rechenzyklus berechnete Datensatz ist und m von 2 bis N läuft. Die Stapelung erfolgt dann nach der Rekursionsformel :

$$S_1(f) = X_1(f)$$

$$S_m(f) = \frac{m-1}{m} \cdot S_{(m-1)}(f) + \frac{1}{m} X_m(f).$$

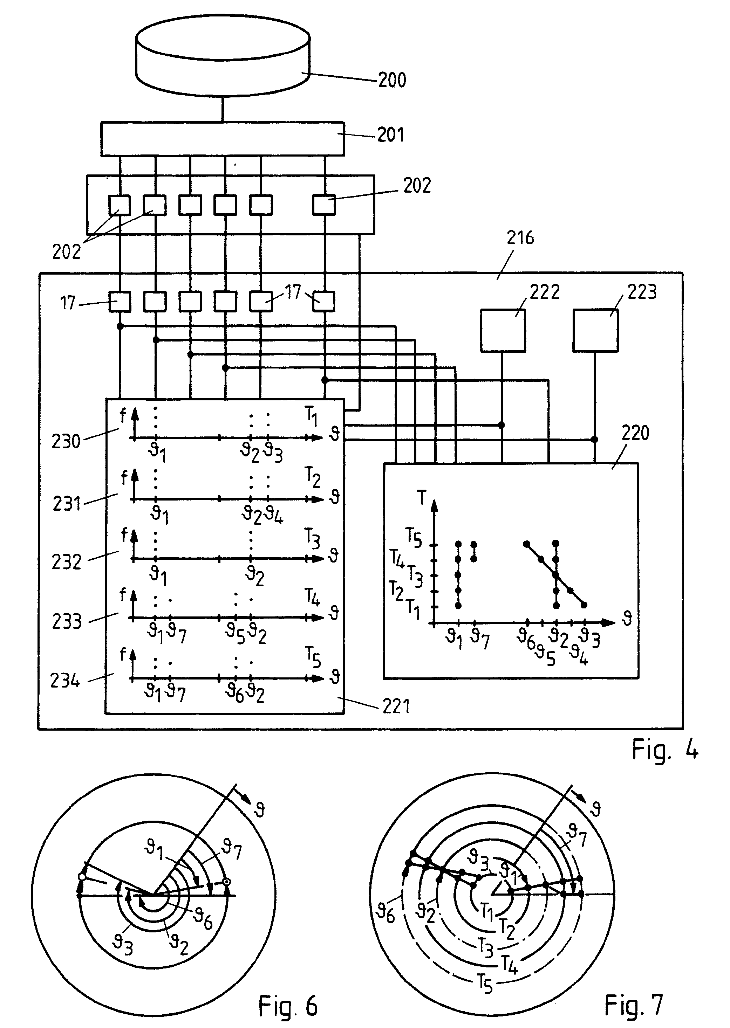

Fig. 4 zeigt den prinzipiellen Aufbau einer Panorama-Sonar-Anlage mit einer Zylinderbasis 200 und einem Richtungsbildner 201. Im Richtungsbildner 201 werden Richtcharakteristiksignale gebildet und in einem das erfindungsgemäße Verfahren realisierenden Verarbeitungskanal 202 weiterverarbeitet. Jeder Verarbeitungskanal 202 besteht aus einem Bandpaß 11, einem Hüllkurvendetektor 12, einem Tiefpaß 13 und einer Frequenzanalyseschaltung 14, wie in Fig. 2 gezeigt. Den Verarbeitungskanälen 202 ist je eine Schwellenschaltung 17 nachgeschaltet, die zu einer Detektionsanzeigeeinrichtung 216 gehört. In der Detektionsanzeigeeinrichtung 216 werden auf zwei Anzeigeeinheiten 220 und 221 zeitabhängig die Detektionsergebnisse für die einzelnen Richtcharakteristiksignale dargestellt. Die Schwellenschaltungen 17 sind genauso aufgebaut, wie es im Zusammenhang mit Fig. 2 beschrieben wurde.

Auf der Anzeigeeinheit 220 ist ein Time-Bearing-Plot für ein willkürlich angenommenes Beispiel dargestellt, bei dem Peilungen $\vartheta$ über der Zeit T gezeigt sind. Die Anzeigeeinheit 220 ist mit einem Winkelgenerator 222 und einem Taktgenerator 223 zum Bereitstellen von Signalen für die waagerechte Ablenkung $\vartheta$ und senkrechte Ablenkung T des Elektronenstrahls für den Anzeigeschirm verbunden. Ihr Hellsteuereingang für die Hellsteuerung des Elektronenstrahls ist mit den Schwellenschaltungen 217 verbunden. Zur Zeit $T_1$ werden unter den Peilungen $\vartheta_1$, $\vartheta_2$ und $\vartheta_3$ drei Punkte angezeigt, da eine Hellsteuerung bei den Peilungen $\vartheta_1$, $\vartheta_2$ und $\vartheta_3$ erfolgte und drei Fahrzeuge über die Schwellenschaltungen 17 detektiert wurden. Zur Zeit $T_2$ erhält man wiederum drei Punkte unter den Peilungen $\vartheta_1$, $\vartheta_2$ und $\vartheta_4$. Das zur Zeit $T_1$ unter der Peilung $\vartheta_3$ detektierte Fahrzeug hat sich zwischenzeitlich mit einer tangentialen Geschwindigkeitskomponente bezüglich der Panorama-Sonar-Anlage weiterbewegt, während die Fahrzeuge unter den Peilungen $\vartheta_1$ und $\vartheta_2$ entweder ruhen oder auf konstantem radialen Kurs fahren. Zur Zeit $T_3$ leuchten nur zwei Punkte auf der Anzeigeeinheit 220 auf, nämlich unter der Peilung $\vartheta_1$ und $\vartheta_2$. Das Fahrzeug, das zuletzt unter der Peilung

$\vartheta_4$ festgestellt wurde, ist entweder auf seinem Kurs weitergefahren und liegt nunmehr in der gleichen Richtung bezüglich der Panorama-Anlage wie das Fahrzeug, das unter der Peilung $\vartheta_2$ detektiert wurde, oder es hat seine Betriebsaggregate abgestellt oder es hat auf Schleichfahrt umgeschaltet und ist nicht mehr von der Panorama-Sonar-Anlage detektierbar.

Zur Zeit $T_4$ kann man feststellen, daß das unter der Peilung $\vartheta_3$ detektierte Fahrzeug auf seinem Kurs weitergefahren ist, da nunmehr unter der Peilung $\vartheta_5$ ein Fahrzeug detektiert wird und die Peilung $\vartheta_2$ erhalten bleibt. Es besteht aber auch die Möglichkeit, daß das bisher unter der Peilung $\vartheta_2$ detektierte Fahrzeug seinen Kurs geändert hat und nunmehr unter der Peilung $\vartheta_5$ zu erkennen ist und das andere Fahrzeug unter der Peilung $\vartheta_2$ zu finden ist. Im Bereich der Peilung $\vartheta_1$ ist zur Zeit $T_4$ festzustellen, daß unter dem benachbarten Winkel $\vartheta_7$ ein Fahrzeug detektiert wird, das entweder bislang zusammen mit dem unter $\vartheta_1$ gepeilten Fahrzeug die gleiche Peilung aufwies oder erstmalig aufgefaßt wird. Der Anzeigeeinheit 220 ist dies nicht zu entnehmen. Die Anzeige zur Zeit $T_5$ zeigt vier Fahrzeuge unter den Peilungen $\vartheta_1$, $\vartheta_7$, $\vartheta_8$ und $\vartheta_2$.

Die noch offenen Fragen zur Detektionssituation werden mit einer Logikschaltung in der Detektionsanzeigeeinheit 216 gelöst, die in Fig. 4 nicht eingezeichnet, sondern beispielhaft in Fig. 5 im Zusammenhang mit den Schwellenschaltungen 17 $\vartheta_1$ und 17 $\vartheta_7$ für benachbarte Richtcharakteristiken, die Peilungen $\vartheta_1$ und $\vartheta_7$ liefern, dargestellt ist. An den Ausgängen der Schwellenschaltungen 17 $\vartheta_1$, 17 $\vartheta_7$ erscheinen Frequenzspektren von den mit der zugehörigen Richtcharakteristik empfangenen Geräuschen, die die in den Schwellenschaltungen 17 $\vartheta_1$, 17$\vartheta_7$ eingestellte Detektionsschwelle überschreiten. Es werden in diesem Beispiel Spektrallinien der Frequenzen $f_1$ und $f_2$ daraufhin überprüft, ob mit den Richtcharakteristiken ein Ziel unter den Peilungen $\vartheta_1$ und $\vartheta_7$ neu aufgefaßt ist oder ob, um bei dem vorher beschriebenen Detektionsbeispiel zu bleiben, zur Zeit $T_3$ mehr als ein Fahrzeug detektiert wurde und zur Zeit $T_4$ eine Zieltrennung vorliegt. Am Ausgang H der Logikschaltung 224 erscheint ein Signal, wenn eine Zieltrennung erkannt ist.

Die Logikschaltung 224 besteht aus zwei UND-Gattern 225, 226, deren vier Eingänge mit den Ausgängen der Schwellenschaltungen 17 $\vartheta_1$, 17 $\vartheta_7$ verbunden sind, einem daran anschließenden ODER-Gatter 227, einer parallel dazu angeordneten, mit den Schwellenschaltungen 17 $\vartheta_1$, 17 $\vartheta_7$ verbundenen Logikstufe 228 und einem UND-Gatter 229, das mit dem ODER-Gatter 227 und der Logikstufe 228 verbunden ist.

Für das angegebene Detektionsbeispiel werden zur Zeit $T_3$ unter der Peilung $\vartheta_1$ bei den Frequenzen $f_1$ und $f_2$ Spektrallinien an den Ausgängen A und B der Schwellenschaltung 17 $\vartheta_1$ festgestellt. Diese Ausgänge weisen L-Signale auf. An den Ausgängen C und D der Schwellenschaltung 17 $\vartheta_7$ erscheinen keine Spektrallinien, ihre Ausgänge weisen O-Signale auf. Am Ausgang E des ODER-Gatters 227 erscheint dann ein O-Signal. Die Kombination aus den beiden UND-Gattern 225, 226 und dem ODER-Gatter 227 führt folgende Verknüpfung der Signale an ihren Eingängen A, B, C, D durch :

$$E \; = \; A \cdot \overline{B} \cdot \overline{C} \cdot D \; + \; \overline{A} \cdot B \cdot C \cdot \overline{D} \; .$$

Zur Zeit $T_4$, wenn die Spektrallinie der Frequenz $f_2$ bei der Peilung $\vartheta_1$ verschwindet und unter der Peilung $\vartheta_7$ detektiert wird und die andere Spektrallinie der Frequenz $f_1$ unter der Peilung $\vartheta_1$ bestehen bleibt, erscheint am Ausgang E ein L-Signal, da die Eingänge A und D jeweils ein L-Signal und die Eingänge B und C ein O-Signal aufweisen.

Die Logikstufe 228 besteht aus zwei UND-Gattern 2281, 2282, die nur dann an ihren Ausgängen ein L-Signal abgeben, wenn an beiden Eingängen ein L-Signal ansteht, einem nachgeordneten NOR-Gatter 2283 und einem vom Taktgeber 223 schaltbaren Flip-Flop 2284. Zur Zeit $T_3$ hat das UND-Gatter 2281 ein L-Signal, das andere UND-Gatter 2282 ein O-Signal, da dort keine Spektrallinie detektiert wurde. Am Ausgang des nachgeschalteten NOR-Gatters 2283 erscheint ein L-Signal, das das nachfolgende Flip-Flop 2284 für ein L-Signal an seinem Ausgang D vorbereitet. Zur Zeit $T_4$ gibt anschließend das NOR-Gatter 2283 ein O-Signal ab und das Flip-Flop 2284 kippt auf das L-Signal. Jetzt erscheint am Ausgang H der Logikschaltung 224 ein L-Signal, das die Zieltrennung zur Zeit $T_4$ kennzeichnet.

Hier ist die Logikschaltung 224 beispielhaft nur für zwei Spektrallinien bei zwei Schwellenschaltungen 17 angegeben. Es ist selbstverständlich, daß auch sämtliche anderen Spektrallinien am Ausgang der Schwellenschaltungen 17 in Fig. 4 in der Detektionsanzeigeeinheit 216 in gleicher Weise durch entsprechende Logikschaltungen untersucht werden.

Eine andere Art der Darstellung von Detektionsergebnissen ist in Fig. 4 durch die Anzeigeeinheit 221 in der Detektionsanzeigeeinheit 116 angegeben. Auf dem Bildschirm der Anzeigeeinheit 221 sind fünf untereinander angeordnete Anzeigeschirmeinheiten 230 bis 234 zu sehen, auf denen jeweils in kartesischem Koordinatensystem Frequenzen f in Abhängigkeit von der Peilung $\vartheta$ angezeigt werden, wobei die Helligkeit der dort erscheinenden Punkte abhängig von Ausgangssignalen der Schwellenschaltungen 17 ist.

Sämtliche Anzeigeschirmeinheiten 230 bis 234 sind mit ihrem Hellsteuereingang mit den Schwellenschaltungen 17, mit ihrem Eingang für die unabhängige Variable $\vartheta$ mit dem Winkelgenerator 222 und mit ihrem Eingang für die abhängige Variable f mit den Frequenzausgängen der Frequenzanalyseschaltungen in den Verarbeitungskanälen 202 verbunden. Die Anzeigeschirmeinheiten 230 bis 234 werden zeitlich nacheinander durch den Taktgenerator 223 angesteuert. Zur Zeit $T_1$ werden auf der obersten Anzeigeschirmeinheit 230 die zur Zeit $T_1$ in den Verarbeitungskanälen 202 ermittelten Frequenzen über den Peilungen $\vartheta_1$, $\vartheta_2$ und $\vartheta_3$ angezeigt. Zur Zeit $T_2$ wird erneut ein Frequenzspektrum je Verarbeitungskanal 202 ermittelt und auf der darunter liegenden Anzeigeschirmeinheit 231 angezeigt. Man sieht, daß die unter der Peilung $\vartheta_1$ angezeigten drei Frequenzen unverändert erhalten geblieben sind, ebenso die unter der Peilung $\vartheta_2$ angezeigte Frequenz, daß jedoch die unter der Peilung $\vartheta_3$ zur Zeit $T_1$ angezeigten zwei Frequenzen jetzt unter der Peilung $\vartheta_4$ wiederzufinden sind. Ein unter der Peilung $\vartheta_3$ zur Zeit $T_1$ detektiertes Fahrzeug weist also eine tangentiale Geschwindigkeitskomponente bezüglich der Panorama-Sonar-Anlage auf und ist nunmehr unter der Peilung $\vartheta_4$ wiederzufinden.

Zur Zeit $T_3$ hat sich das Bild wieder verändert, wie der dritten Anzeigeschirmeinheit 232 zu entnehmen ist. Die drei Frequenzen unter der Peilung $\vartheta_1$ und die eine Frequenz unter der Peilung $\vartheta_2$ sind erhaltengeblieben. Unter der Peilung $\vartheta_2$ sind zwei Frequenzen dazugekommen, die zur Zeit $T_2$ unter dem Peilwinkel $\vartheta_4$ detektiert wurden. Das Fahrzeug hat sich also weiterhin auf seinem Kurs mit konstanter Geschwindigkeit bewegt.

Zur Zeit $T_4$ erkennt man auf der Anzeigeschirmeinheit 233, daß zwei der bisher unter der Peilung $\vartheta_1$ detektierten Frequenzen nach wie vor unter der Peilung $\vartheta_1$, aber die dritte Frequenz unter der Peilung $\vartheta_7$ detektiert wird. Damit ist erkennbar, daß unter der Peilung $\vartheta_1$ bislang mindestens zwei Fahrzeuge angezeigt wurden. Auch hier ist jetzt eine Zieltrennung möglich.

Die zur Zeit $T_2$ unter den Peilungen $\vartheta_2$ und $\vartheta_4$ angezeigten Frequenzen sind zur Zeit $T_4$ unter den Peilungen $\vartheta_2$ und $\vartheta_5$ zu finden. Man sieht, daß die Peilungen der beiden Fahrzeuge sich gekreuzt haben.

Das unter der Peilung $\vartheta_2$ zur Zeit $T_1$ detektierte Fahrzeug weist bis zur Zeit $T_4$ eine stehende Peilung auf, es ruht oder fährt bezüglich der Panorama-Sonar-Anlage auf radialem Kurs.

Zur Zeit $T_5$ ergibt sich folgendes Bild :
Die beiden Fahrzeuge, die zuletzt unter den Winkeln $\vartheta_1$, $\vartheta_2$ und $\vartheta_7$ gepeilt wurden, haben ihre Peilungen beibehalten. Das Fahrzeug, das zur Zeit $T_4$ unter der Peilung $\vartheta_5$ angezeigt wurde, hat sich auf seinem Kurs weiterhin fortbewegt und ist unter der Peilung $\vartheta_6$ zu finden.

Auf der Anzeigeeinheit 220 ist die gleiche Situation dargestellt, nur daß die beiden Fahrzeuge, die unter der konstanten Peilung $\vartheta_2$ und den Peilungen $\vartheta_3$, $\vartheta_4$, $\vartheta_5$ und $\vartheta_6$ detektiert wurden, hier nur mit Hilfe der Logikschaltung 224 zu trennen sind. Mit der Anzeigeeinheit 221 wird auf einem Bildschirm deutlich sichtbar, daß im Bereich um die Peilung $\vartheta_2$ zwei Ziele mit kreuzenden Peilungen detektiert wurden und im Bereich um die Peilung $\vartheta_1$ zum Zeitpunkt $T_4$ eine Zieltrennung möglich wurde.

Anstelle der Darstellung des Time-Bearing-Plots in kartesischen Koordinaten, wie auf der Anzeigeeinheit 220 in Fig. 4, ist die gleiche Situation auch in Polarkoordinaten darstellbar, bei der der Winkelablenkung die Peilung $\vartheta$ zugeordnet ist. Eine solche Detektionsanzeige ist in Fig. 6 skizziert. Zur Zeit $T_1$ erscheint auf dem Anzeigeschirm ein Punkt unter der Peilung $\vartheta_1$, der bei mehrfacher zeitlicher Bestätigung einen Kreis erhält, und ab dem Zeitpunkt $T_4$ unter der Peilung $\vartheta_7$ einen weiteren Punkt erhält, der zum Zeitpunkt $T_5$ mit einer Schleppe versehen ist, um anzudeuten, daß hier eine Zieltrennung in zwei Ziele unter den Peilungen $\vartheta_1$ und $\vartheta_7$ stattgefunden hat. Außerdem kann man dem Anzeigeschirm entnehmen, daß ein Fahrzeug unter der Peilung $\vartheta_2$ von der Zeit $T_1$ bis zur Zeit $T_5$ detektiert wurde, da dort das Ziel mit einem Kreis versehen wurde, während ein zweites Fahrzeug, das zur Zeit $T_1$ unter der Peilung $\vartheta_3$ detektiert wurde, jetzt die Peilung $\vartheta_6$ aufweist, wie die Schleppe auf dem Anzeigeschirm verdeutlicht.

Fig. 7 zeigt eine weitere Möglichkeit der Darstellung des Time-Bearing-Plots, bei der eine Polarkoordinatendarstellung gewählt ist. Der Winkelablenkung ist die Peilung $\vartheta$ und der Radialablenkung die Zeit T zugeordnet. Man erkennt auch hier, daß unter den Winkeln $\vartheta_1$ und $\vartheta_2$ mit stehender Peilung detektiert wurde. Die Zieltrennung im Bereich der Peilungen $\vartheta_1$, $\vartheta_7$ zur Zeit $T_4$ und die Zielkreuzung im Bereich der Peilung $\vartheta_2$ zur Zeit $T_3$ ist wie auf der Anzeigeeinheit 220 zu erkennen.

## Ansprüche

1. Einrichtung zur Detektion von Fahrzeugen mit einem Empfänger (10) zum Empfang der vom jeweiligen Fahrzeug abgestrahlten Betriebsgeräusche an einem vom Fahrzeug entfernten Ort, bei der dem Empfänger direkt oder über einen Bandpaß (11) ein Hüllkurvendemodulator (12, 13) nachgeordnet ist und der Hüllkurvendemodulator mit einer Frequenzanalyse-schaltung (14) zur Ermittlung des Frequenzspektrums der Einhüllenden des Ausgangssignals des Empfängers (10) verbunden ist, wobei der Empfänger (10) richtungsselektiv ausgelegt ist, und wobei eine Detektionsanzeigeeinheit (16) zur Anzeige der Fahrzeugdetektion je Richtung als Peilung vorgesehen ist, dadurch gekennzeichnet, daß mehrere, den verschiedenen Richtungen entsprechende und jeweils einen Hüllkurvendemodulator (12, 13), eine Frequenzanalyseschaltung (14) sowie gegebenenfalls einen Bandpaß (11) enthaltende Verarbeitungskanäle (202) vorgesehen sind, welche mit einer Logikschaltung (224) zum Vergleich der für jede Peilung getrennt vorliegenden Spektrallinien der über einen Zeitraum bestimmten Frequenzspektren, der größer als das dem Frequenzspektrum zugrundeliegende Zeitintervall ist, verbunden sind, und daß die Logikschaltung so ausgebildet ist, daß ein Auswandern oder ein Austauschs einzelner Spektrallinien in benachbarte Peilungen festgestellt und zur Kenntlichmachung einer Zieltrennung in der Anzeigeeinheit (16) angezeigt wird.

2. Einrichtung nach Anspruch 1, dadurch gekennzeichnet, daß die Vorrichtung (14) zur Ermittlung des Frequenzspektrums der Einhüllenden einen Integrator mit einer Integrationszeit über ein oder mehrere vorgebbare Zeitintervalle (15) enthält.

3. Einrichtung nach Anspruch 2, dadurch gekennzeichnet, daß die Vorrichtung (14) zur Ermittlung des Frequenzspektrums der Einhüllenden als Schaltung zur Berechnung des Frequenzspektrums durch Fast-Fourier-Transformation ausgebildet ist.

4. Einrichtung nach Anspruch 4, dadurch gekennzeichnet, daß der Integrator (15) als Stapelspeicher ausgebildet ist.

5. Einrichtung nach einem der Ansprüche 1 bis 5, dadurch gekennzeichnet, daß die Detektionsanzeigeeinheit (16, 216) eingangsseitig eine Schwellenschaltung (17) aufweist, deren Schwelle abhängig von einer Falschalarmrate einstellbar ist.

6. Einrichtung nach Anspruch 6, dadurch gekennzeichnet, daß die Schwellenschaltung (17) eine Rechenschaltung (19) zum Bilden eines Bezugsspektrums und einen nachgeschalteten Quotientenbildner (20) aufweist, die eingangsseitig beide mit dem Ausgang der Vorrichtung (14) zur Ermittlung des Frequenzspektrums der Einhüllenden verbunden sind, und daß dem Quotientenbildner (20) eine Schwellenstufe (21) nachgeordnet ist, in der die Schwelle einstellbar ist.

7. Einrichtung nach einem der Ansprüche 1 bis 7, bei welcher der Empfänger als Empfangsanlage zum Bilden von Richtcharakteristiken ausgebildet ist, dadurch gekennzeichnet, daß die Detektionsanzeigeeinheit (216) von einem Winkelgenerator (222) ansteuerbar ist, dessen Winkelausgangssignal Peilungen (ϑ) zugeordnet sind.

8. Einrichtung nach Anspruch 8, dadurch gekennzeichnet, daß die Detektionsanzeigeeinheit (216) für jede Richtcharakteristik eine Schwellenschaltung (17) enthält, daß den Schwellenschaltungen (17) eine Anzeigeeinheit (22) für kartesische Koordinaten nachgeordnet ist, daß ihr Eingang für die unabhängige Variable (ϑ) mit dem Winkelgenerator (222), ihr Hellsteuereingang mit den Schwellwertschaltungen (17) verbunden ist und ihr Eingang für die abhängige Variable (f) zeitabhängig ansteuerbar ist.

9. Einrichtung nach Anspruch 9, dadurch gekennzeichnet, daß die Detektionsanzeigeeinheit (216) eine Anzeigeeinheit (221) mit einer oder mehreren zeitlich nacheinander ansteuerbaren Anzeigeschirmeinheiten für kartesische Koordinaten aufweist, daß ihr Eingang für die unabhängige Variable (ϑ) mit dem Winkelgenerator (222) ihr Eingang für die abhängige Variable (f) mit Frequenzausgängen der Vorrichtung (14) zur Ermittlung des Frequenzspektrums der Einhüllenden und ihr Hellsteuereingang mit den Schwellenschaltungen (17) verbunden sind.

## Claims

1. A system for the detection of vessels, having a receiver (10) for receiving the operating noises radiated by the particular vessel at a place remote therefrom, wherein an envelope demodulator (12, 13) is connected directly or via a band-pass filter (11) to the receiver, and the envelope demodulator is connected to a frequency circuit (14) for determining the frequency spectrum of the envelope of the output signal of the receiver (10), the receiver (10) being designed direction-selective, and a detection display unit (16) is provided to display the vessel detection as a bearing for each direction, characterized in that a number of processing channels (202) are provided which correspond to the various directions and each comprise an envelope demodulator (12, 13) a frequency analyzing circuit (14) and if necessary a band-pass filter (11) and which are connected to a logic circuit (224) for comparing the spectral lines, present separately for each bearing, of the frequency spectra determined over a period of time which is greater than the interval of time on which the frequency spectrum is based, and the logic circuit is so constructed that any shift or interchange of individual spectral lines to adjacent bearings is detected and displayed in the display unit (16) to make the separation of a target recognizable.

2. A system according to claim 1, characterized in that the device (14) for determining the frequency spectrum of the envelope comprises an integrator (15) having an integration time over 1 or more providable intervals of time.

3. A system according to claim 2, characterized in that the device (14) for determining the frequency spectrum of the envelope takes the form of a circuit for calculating the frequency spectrum by a fast Fourier transformation.

4. A system according to claims 2 or 3, characterized in that the integrator (14) takes the form of a push-down store.

5. A system according to one of claims 1 to 4, characterized in that the detection display unit (16, 216) has on the input side a threshold circuit (17) whose threshold is adjustable in dependence on a false alarm rate.

6. A system according to claim 5, characterized in that the threshold circuit (17) has a computation circuit (19) for forming a reference spectrum and a connected quotient former (20) which are both connected on the input side to the output of the device (14) for determining the frequency spectrum of the envelope, and connected to the quotient former (20) is a threshold stage (21) in which the threshold can be adjusted.

7. A system according to one of claims 1 to 6, wherein the receiver takes the form of a receiving installation for the formation of directional characteristics, characterized in that the detection display unit (216) can be operated by an angle generator (222) with whose angular output signal bearings (ϑ) are associated.

8. A system according to claim 7, characterized in that the detection display unit (216) for each directional characteristic comprises a threshold circuit (17), and associated with the threshold circuits (17) is a display unit (22) for cartesian coordinates, its input for the independent variable () being connected to the angle generator (222) and its luminance control input being connected to the threshold value circuits (17), and its input for the dependent variable (f) being operable in dependence on time.

9. A system according to claim 8, characterized in that the detection display unit (216) has a display unit (221) having one or more display screen units for cartesian coordinates which can be operated in succession in time, its input for the independent variable (ϑ) being connected to the angle generator (222), its input for the dependent variable (f) being connected to the frequency outputs of the device (14) for determining the frequency spectrum of the envelope, and its luminance control input being connected to the threshold circuits (17).

## Revendications

1. Dispositif pour détecter des véhicules, comportant un récepteur (10) servant à recevoir des bruits de fonctionnement émis par le véhicule respectif et situé en un emplacement éloigné du véhicule, et dans lequel le démodulateur de courbe enveloppe (12, 13) est branché, directement ou au moyen d'un filtre passe-bande, en aval du récepteur et est relié à un circuit d'analyse fréquentielle (14) servant à déterminer le spectre de fréquences de l'enveloppe du signal de sortie du récepteur (10), le récepteur (10) étant agencé de manière à être sélectif du point de vue de la direction, et dans lequel il est prévu une unité d'affichage de détection (16) servant à afficher la détection du véhicule en fonction de la direction, en tant que repérage, caractérisé en ce qu'il est prévu plusieurs canaux de traitement (202), qui correspondent aux différentes directions, contiennent chacun un démodulateur de courbe enveloppe (12,13), un circuit d'analyse fréquentielle (14) ainsi que, éventuellement, un filtre passe-bande (11), et sont reliés à un circuit logique (224) servant à comparer les raies spectrales, présentes séparément pour chaque repérage, des spectres de fréquences déterminés pendant un intervalle de temps qui est supérieur à l'intervalle de temps pris pour base du spectre de fréquences, et que le circuit logique est agencé de telle sorte qu'une excursion ou une permutation de raies spectrales individuelles dans des repérages voisins est déterminée et affichée dans l'unité d'affichage (16) pour caractériser une séparation de cibles.

2. Dispositif selon la revendication 1, caractérisé en ce que le dispositif (14) servant à déterminer le spectre de fréquences de l'enveloppe contient un intégrateur (15) possédant une durée d'intégration s'étendant sur un ou plusieurs intervalles de temps pouvant être prédéterminés.

3. Dispositif selon la revendication 2, caractérisé en ce que le dispositif (14) servant à déterminer le spectre de fréquences de l'enveloppe est réalisé sous la forme d'un circuit servant à calculer le spectre de fréquences au moyen d'une transformée de Fourier rapide.

4. Dispositif selon la revendication 4, caractérisé en ce que l'intégrateur (15) est réalisé sous la forme d'une mémoire pile.

5. Dispositif selon l'une des revendications 1 à 5, caractérisé en ce que l'unité d'affichage de détection (16, 216) comporte, sur son côté entrée, un circuit à seuil (17), dont le seuil est réglable en fonction d'un taux de fausses alarmes.

6. Dispositif selon la revendication 6, caractérisé en ce que le circuit à seuil (17) possède un circuit de calcul (19) servant à former un spectre de référence et un dispositif de formation de quotient (20), branché en aval, ces deux unités étant reliées, côté entrée, à la sortie du dispositif (14) servant à déterminer le spectre de fréquences de l'enveloppe, et qu'en aval du dispositif de formation de quotient (20) est branché un étage à seuil (21), dans lequel le seuil est réglable.

7. Dispositif selon l'une des revendications 1 à 7, dans lequel le récepteur est réalisé sous la forme d'une installation de réception servant à former des caractéristiques directionnelles, caractérisé en ce que l'unité d'affichage de détection (216) peut être commandée par un générateur d'angles (222), au signal de sortie d'angle duquel sont associés des repérages (ϑ).

8. Dispositif selon la revendication 8, caractérisé en ce que l'unité d'affichage de détection (216) contient, pour chaque caractéristique directionnelle, un circuit à seuil (17), qu'en aval des circuits à seuil (17) est branchée une unité d'affichage (22) pour des coordonnées cartésiennes, que l'entrée, prévue pour la variable indépendante (ϑ), de cette unité d'affichage est reliée au générateur d'angles (222), que son entrée de commande d'éclairement est reliée aux circuits à seuils (17) et que son entrée pour la variable dépendante (f) peut être commandée en fonction du temps.

9. Dispositif selon la revendication 9, caractérisé en ce que l'unité d'affichage de détection (216) possède une unité d'affichage (221) comportant une ou plusieurs unités à écran d'affichage, pouvant être commandées successivement dans le temps, pour des coordonnées cartésiennes, que la sortie de cette unité d'affichage pour la variable indépendante (ϑ) est reliée au générateur d'angles (222), que son entrée pour la variable dépendante (f) est reliée à des sorties de fréquences du dispositif (14) servant à déterminer le spectre de fréquences de l'enveloppe et que son entrée de commande d'éclairement est reliée aux circuits à seuils (17).

Fig. 1

Fig. 2

Fig. 3

Fig. 5

Fig. 4

Fig. 6

Fig. 7